# FASCICULE DE BREVET EUROPEEN

(11) **EP 2 649 107 B1**
(45) Date de publication et mention de la délivrance du brevet: **08.02.2017**
(21) Numéro de dépôt: 10803261.6
(22) Date de dépôt: 10.12.2010
(51) Int. Cl.: C08F 255/08, C08F 255/02, C08L 77/02, B32B 15/08, C08L 51/06, C09J 7/02, C09J 177/02, C09J 5/06, E04C 2/06, C09J 151/06, B32B 15/085, B32B 15/088, B32B 15/18, B32B 27/30, B32B 27/20, B32B 27/32, B32B 27/34, C08L 77/00, E04C 2/292

(54) **MÉLANGE DE POLYMÈRES À CONTRAINTE SEUIL ET SON UTILISATION POUR LA FABRICATION DE COMPOSITES MÉTAL-POLYMÈRE**
MISCHUNG VON POLYMEREN MIT FLIESSSPANNUNG UND IHRE VERWENDUNG ZUR HERSTELLUNG VON METALL-POLYMER-VERBUNDSTOFFEN
BLEND OF POLYMERS HAVING YIELD STRESS AND USE THEREOF FOR THE MANUFACTURE OF METAL-POLYMER COMPOSITES

(43) Date de publication de la demande: 16.10.2013
(73) Titulaire: ArcelorMittal, 1160 Luxembourg (LU); Centre National de la Recherche Scientifique, 75794 Paris Cedex 16 (FR); Institut National des Sciences Appliquées de Lyon, 69621 Villeurbanne Cedex (FR); Université Claude Bernard Lyon I, 69622 Villeurbanne Cedex (FR); Université Jean Monnet de Saint-Etienne, 42023 Saint-Etienne Cedex 2 (FR)
(72) Inventeur: DOUX, Marjolaine, F-75010 Paris (FR); LUCCHINI, Laurence, F-94220 Charenton Le Pont (FR); VERCHÈRE, Didier, F-60260 Lamorlaye (FR); AVRIL, Florence, B-4000 Liege (BE); CASSAGNAU, Philippe, F-69390 Millery (FR); SAGE, Daniel, F-69100 Villeurbanne (FR)
(74) Mandataire: Lavoix
(86) Numéro de dépôt international: PCT/FR2010/052675
(87) Numéro de publication internationale: WO 2012/076763

(56) Documents cités:
- EP-A1- 1 504 892
- EP-A2- 1 342 764
- WO-A1-02/28959
- DE-A1- 10 011 589
- DE-A1-102007 046 226
- FR-A1- 2 930 556
- US-A- 4 690 856

## Description

La présente invention concerne de nouveaux mélanges de polymères à contrainte seuil et leur utilisation pour la fabrication de composites métal-polymère.

### [Etat de la technique]

Une des voies explorées pour réduire la consommation des automobiles, est l'allègement du poids des véhicules. Dans ce cadre, une recherche active est menée sur le remplacement des tôles métalliques par des composites métal/polymère, tels que des structures métal/polymère/métal, aussi appelées structures sandwich, ou des parements métalliques recouverts de polymère.

Les polymères utilisés pour ces composites doivent répondre à de nombreuses exigences, et notamment présenter une adhérence au métal, avoir une rigidité élevée et un allongement supérieur à celui du métal.

Afin de permettre un allègement substantiel, le polymère doit avoir une épaisseur assez importante, typiquement de 300 µm à plusieurs mm. Il est donc préférable d'utiliser un polymère thermoplastique extrudable plutôt qu'un polymère thermodurcissable qui doit être appliqué en solution.

Par ailleurs, il convient que le polymère utilisé soit compatible avec l'étape de cataphorèse utilisée dans le secteur automobile pour la mise en peinture. Ce procédé implique une cuisson pouvant atteindre 210°C pendant 45 minutes environ. Lorsque le polymère devient trop fluide, il flue et entraine le glissement des feuilles de métal, ce qui conduit à la destruction du composite.

La demande de brevet WO 2005/014278 propose des structures sandwich comportant à titre de polymère un mélange de polyamide 6, de polyéthylène modifié et de copolymère styrène-anhydride maléique (SMA). Ce mélange présente des propriétés satisfaisantes, mais son point de fusion élevé (220°C), et donc sa température élevée de mise en oeuvre (240°C), le rend incompatible avec certains équipements d'assemblage par colaminage. En effet, ces équipements ne sont pas en mesure d'atteindre des températures supérieures à 220°C nécessaires pour fondre ce mélange polymérique en surface afin de permettre l'étalement du mélange polymérique sur le métal et de parfaire l'adhérence au métal. Par ailleurs, il s'est révélé difficile d'assurer la répartition homogène du copolymère styrène-anhydride maléique (SMA) dans le mélange, ce qui affecte l'homogénéité de la morphologie et de l'adhérence du film.

### [Problème technique]

Il existe donc un besoin de disposer d'un mélange polymérique ayant les caractéristiques requises pour la fabrication de composites métal-polymère qui ne présente pas les inconvénients évoqués ci-dessus. En particulier, il existe le besoin de disposer d'un mélange polymérique de formulation simple capable de résister à l'étape de cataphorèse à 210°C tout en ayant une température de fusion n'excédant pas 210°C.

### [Résumé de l'Invention]

L'invention découle de l'idée d'utiliser un mélange polymérique ayant un comportement de fluide à contrainte seuil, c'est-à-dire présentant même à l'état fondu une tenue au fluage suffisante pour résister à l'étape de cataphorèse.

Une étude approfondie a permis d'identifier des mélanges de polyamide et de polyéthylène modifié possédant les propriétés requises pour l'application en termes d'adhérence, de rigidité et d'allongement et qui constituent à l'état fondu des fluides à contrainte seuil.

Aussi, selon un premier aspect, l'invention vise un mélange polymérique biphasique, comprenant :
(a) un polyamide présentant un point de fusion d'au plus égal à 210°C,
(b) une polyoléfine modifiée comportant des fonctions carboxyliques,
dont le comportement rhéologique à l'état fondu est caractérisé par une contrainte seuil d'au moins 50 Pa.

De préférence, le mélange polymérique selon l'invention comprend 30 à 70% en poids de polyamide. Le mélange polymérique comprend par ailleurs avantageusement 30 à 70% en poids de polyoléfine modifiée.

La polyoléfine modifiée est de préférence un polyéthylène modifié. Avantageusement, il s'agit d'une polyoléfine modifiée par de l'anhydride d'acide maléique. Une polyoléfine modifiée par 0,01 à 20 % en poids de composé comportant des fonctions carboxyliques est particulièrement préférée.

Avantageusement, le polyamide est un polyamide 11.

Selon un mode de réalisation préféré, le mélange polymérique selon l'invention comporte une phase continue, aussi appelée matrice, composée essentiellement de polyamide et une phase co-continue ou dispersée composée essentiellement de polyoléfine. Lorsque la phase est dispersée, elle se trouve de préférence sous forme de nodules, dont le diamètre moyen est de préférence inférieur à 500 nm. Lorsque le mélange est constitué seulement de ces deux polymères, le mélange polymérique se présente ainsi sous forme d'une matrice en polyamide dans laquelle la polyoléfine modifiée est dispersée ou forme une phase co-continue.

Avantageusement, le mélange selon l'invention comprend en outre 5 à 20% en poids de charges.

De préférence, le mélange selon l'invention possède une contrainte seuil comprise entre 200 et 2000 Pa.

Selon un autre aspect, l'invention vise un procédé de préparation du mélange polymérique décrit ci-dessus comprenant les étapes de :
(a) fournir une quantité appropriée de polyamide et une quantité appropriée de polyoléfine modifiée comportant des fonctions carboxyliques ; et
(b) mélanger le polyamide et la polyoléfine modifiée à une température supérieure au pic de fusion du polyamide.

Selon un autre aspect encore, l'invention vise un procédé de fabrication d'un composite métal-polymère comprenant les étapes consistant en :
(i) fourniture d'une première feuille de métal, éventuellement chauffée à la température de fusion du mélange polymèrique ;
(ii) application d'un mélange polymérique selon l'invention sur la première feuille de métal pour former un composite métal-polymère ;
(iii) le cas échéant, application d'une seconde feuille de métal éventuellement chauffée à la température de fusion du polymère, sur le mélange polymérique pour former un composite métal-polymère-métal ; et
(iv) chauffage du composite jusqu'à fusion du mélange polymérique au contact avec le métal pour compléter l'adhérence.

Aussi, selon un autre aspect, l'invention vise les structures sandwich comportant entre deux feuilles de métal un film du mélange polymérique selon l'invention ainsi que des parements comprenant une feuille de métal revêtue du mélange polymérique selon l'invention.

Enfin, selon un dernier aspect, l'invention vise un parement comprenant une feuille de métal revêtue du mélange polymérique selon l'invention.

### [Définitions]

On entend dans le cadre du présent exposé sous le terme « fluide à contrainte seuil » un comportement rhéologique d'un matériau déformable caractérisé par le fait qu'un écoulement ait lieu seulement au-delà d'une certaine valeur de contrainte, dite contrainte seuil. La notion de contrainte seuil est connue pour les fluides en général et pour des polymères à l'état fondu en particulier.

Par ailleurs, on entend sous le terme de « tenue au fluage » l'absence de vitesse de déformation, par exemple par écoulement, d'un matériau soumis à une contrainte pendant une durée suffisante.

On entend par le terme « mélange polymérique » une composition de plusieurs, notamment de deux polymères non miscibles. Les polymères sont pour la plupart immiscibles entre eux du fait de leurs masses molaires élevées et/ou d'interactions défavorables. Les mélanges de polymère se présentent donc le plus souvent sous forme de structures multiphasiques. Dans le cas du mélange de deux polymères, les mélanges biphasiques peuvent comporter une phase continue et une phase dispersée. Le plus souvent, le polymère majoritaire forme la phase continue alors que le polymère minoritaire forme la phase dispersée. Lorsque les polymères sont présents en proportions similaires, on peut également observer des mélanges dans lesquelles les deux phases sont toutes deux continues appelées co-continues. Il existe différents types de morphologies dans les mélanges polymériques, dont notamment la morphologie nodulaire, la morphologie fibrillaire et la morphologie lamellaire.

En principe, le mélange décrit dans la présente demande est un mélange physique, n'impliquant pas de liaisons covalentes entre les constituants. Cependant, à l'interface des polymères, les groupes amines terminales du polyamide peuvent former des liaisons imide avec les groupes carboxyliques de la polyoléfine modifiée, comme il sera discuté plus en détail plus loin.

On entend par le terme « polyoléfine modifiée » désigner une polyoléfine comportant des groupements polaires et notamment carboxyliques. Ces groupements peuvent avoir été introduits dans la polyoléfine lors de la polymérisation ou postérieurement. Les motifs résultants peuvent donc se trouver dans la chaîne principale ou dans les chaînes latérales du polymère modifié. En pratique, les polyoléfines modifiées sont obtenues par copolymérisation d'une oléfine en présence de monomères adaptés ou par réaction de la polyoléfine avec des composés appropriés, aussi appelé greffage. Les acides carboxyliques insaturés et leurs dérivés, notamment leur anhydride constituent des monomères et/ou composés appropriés privilégiés dans le cadre de la présente invention.

On entend par le terme « taux de greffage » dans ce qui suit la concentration massique en composé utilisé pour modifier la polyoléfine dans la polyoléfine modifiée, par rapport au poids final de la polyoléfine modifiée. Sauf indication contraire, ce taux désigne la concentration massique globale dans le polymère, sans distinguer s'il est présent dans le polymère ou sous forme monomérique.

### [Composantes du mélange]

Le mélange polymérique décrit comporte au moins deux constituants, à savoir un polyamide et une polyoléfine modifiée.

Il peut être intéressant dans certaines applications d'ajouter d'autres constituants, par exemple, comme il sera expliqué plus loin, des charges minérales susceptibles d'augmenter encore la contrainte seuil du mélange.

Cependant, afin d'éviter tout problème d'incompatibilité et/ou d'homogénéité, le mélange est constitué de préférence de polyamide et de polyoléfine greffée et est dépourvu de tout autre polymère. De préférence, il est également dépourvu de tout autre composé susceptible de réagir avec les constituants du mélange ou de réagir en milieu humide en dégradant l'adhérence ou la stabilité du mélange.

Sans vouloir être lié par une théorie quelconque, il est supposé que le comportement de fluide à contrainte seuil est lié à la présence d'une structure tridimensionnelle. Grâce à cette structure, le fluide est capable de résister à une contrainte inférieure à τ_{c}. Lorsque la contrainte dépasse τ_{c}, la structure tridimensionnelle est détruite et le polymère flue.

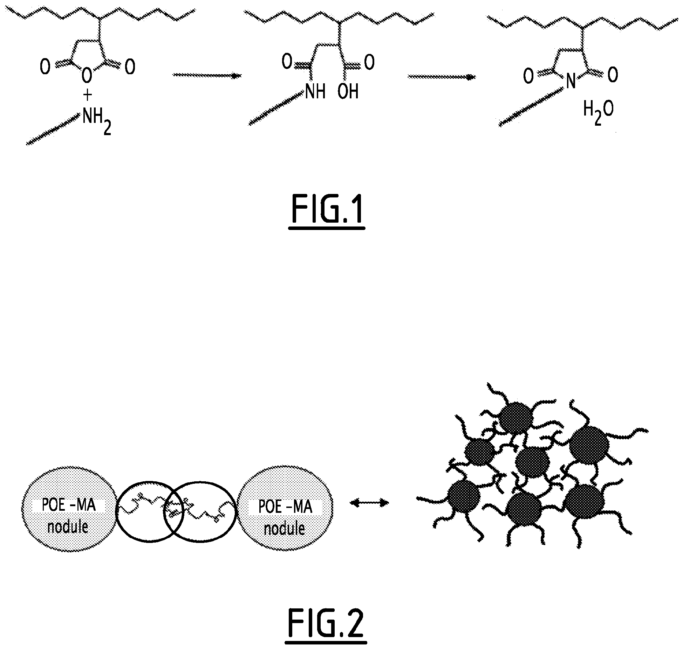

Dans le mélange polymérique décrit, des copolymères di-bloc sont formés par réaction entre les groupements terminaux amines du polyamide et les fonctions carboxyliques des groupements réactifs modifiés sur la polyoléfine. La réaction à l'interface des polymères est illustrée de manière schématique à la figure 1.

Les copolymères ainsi formés *in situ* aux interfaces du mélange peuvent assurer le rôle d'un agent de compatibilisation, permettant ainsi une meilleure dispersion des deux phases et, le cas échéant, des nodules de plus faible taille plus rapprochés les uns des autres. La faible distance internodulaire permet une interaction entre les chaînes de copolymères de nodules voisins par enchevêtrement physique, formant un réseau caoutchoutique tridimensionnel (voir figure 2). Ce réseau tridimensionnel formé par l'interaction internodulaire limite la déformation sous contrainte jusqu'à sa disparition sous une contrainte dite contrainte seuil.

Les polyamides sont des polymères contenant des fonctions amides (-C(=O)-NH-) et peuvent être obtenus par :
(1) polymérisation de lactames avec ouverture de cycle ; ou
(2) polycondensation d'acides aminés ; ou
(3) polycondensation de diamines avec des diacides.

Les polyamides aliphatiques sont désignés par un ou plusieurs chiffres relatifs au nombre d'atomes de carbone contenu dans le motif de répétition. Ainsi, le PA 6 ou PA11 est obtenu par polycondensation d'un aminoacide ou d'un lactame avec respectivement 6 ou 11 atomes de carbone dans le motif. Dans les désignations de type PA 6-6, les valeurs correspondent au nombre d'atomes de carbone de la diamine et du diacide. Les polyamides peuvent être aliphatiques, semi-aromatiques (l'un des monomères seulement est aromatique) ou aromatiques. Les homopolymères formés à partir d'un seul monomère sont préférés, mais des copolymères polyamides obtenus à partir de plusieurs monomères différents peuvent également être envisagés.

Les polyamides semi-cristallins sont préférés par rapport aux polyamides amorphes puisqu'ils sont plus aisément transformés, étant donné qu'ils présentent un pic de fusion plutôt qu'un seul point de ramollissement.

Pour l'application envisagée, le point de fusion du polyamide est avantageusement compris entre 160 et 210°C. Selon un mode de réalisation particulier, le point de fusion du polyamide est compris entre 170 et 200°C.

Parmi les polyamides convenables pour le mélange décrit, on peut citer en particulier le polyamide 11 présentant un point de fusion compris entre 177 et 190°C, ou encore le polyamide 12 présentant un point de fusion compris entre 172 et 180°C.

La masse molaire du polyamide a un impact sur les propriétés du mélange puisqu'elle détermine le nombre de groupes amines terminales disponibles pour former le copolymère au contact avec les fonctions carboxyliques de la polyoléfine modifiée. La masse molaire influence en outre la température de fusion. La masse molaire du polyamide est de préférence comprise entre 1000 à 100 000, avantageusement entre 10 000 et 30 000 g/mol.

En pratique, l'indice de fluidité du polyamide est de préférence compris entre 1 et 40, de préférence 10 à 25 cm³/10min sous 2,16Kg à 235°C.

Les polyamides disponibles dans le commerce comportent souvent 5 à 20% en poids, de préférence 10 à 20% en poids de plastifiants. L'addition d'un plastifiant peut contribuer à améliorer la résistance à l'impact. A titre de plastifiants appropriés peuvent être mentionnés le ε-caprolactame, le sulfonamide de N-butylbenzène, ou le paraoxybenzoate de cétyle.

Cependant, comme évoqué précédemment, le mélange polymérique selon l'invention ne comporte de préférence pas d'additifs autres que ceux présents le cas échéant dans les polymères commerciaux mis en oeuvre et les charges minérales discutées plus loin.

La viscosité newtonienne des polymères, et plus précisément le rapport de viscosité des deux constituants de base constitue également un facteur important afin d'obtenir un mélange aux propriétés satisfaisantes. En effet, les viscosités influencent la morphologie du mélange. Une règle empirique préconise un rapport entre la viscosité en cisaillement de la polyoléfine modifiée et celle du polyamide compris entre 1 et 10. La viscosité newtonienne du polyamide est de préférence comprise entre 500 et 5000, de préférence 1000 à 4000 Pa.s à 210°C.

Le mélange selon l'invention comprend généralement entre 30 et 70 % en poids, et plus préférentiellement entre 40 et 65% en poids de polyamide. En-dessous de 30%, la proportion de polyamide est généralement insuffisante pour conférer au mélange polymérique les propriétés mécaniques avantageuses du polyamide, tandis qu'au-dessus de 70%, on risque de ne plus disposer de suffisamment de polyoléfine modifiée pour favoriser la compatibilisation in-situ des deux constituants.

La polyoléfine modifiée présente dans le mélange peut être obtenue à partir d'une polyoléfine thermoplastique. La polyoléfine peut être choisie notamment parmi le polyéthylène, polypropylène, polyméthylpentène et le polybutène. Parmi ces familles on choisira un polymère aux propriétés appropriées en termes de rigidité, densité et cristallinité.

La polyoléfine particulièrement préférée est le polyéthylène. Il peut s'agir d'homopolymères comme le HDPE (polyéthylène à haute densité) ou le LDPE (polyéthylène à faible densité) ou le LLDPE (polyéthylène linéaire à faible densité) ou de copolymères dérivés du polyéthylène comme les copolymères d'éthylène et d'octène.

Afin de permettre la compatibilisation *in situ* aux interfaces dans le mélange, la polyoléfine est modifiée avec des groupements comportant des fonctions carboxyliques. Ces groupements peuvent être introduits lors de la polymérisation, par copolymérisation en présence des monomères adaptés, ou par greffage postérieur à la polymérisation.

Ces groupements comportant des fonctions carboxyliques sont notamment des groupes d'acides carboxyliques ou dérivés comme par exemple des acides insaturés comportant 1 à 6 fonctions carboxyliques comme l'acide maléique, l'acide fumarique, l'acide mesaconique, l'acide citraconique, l'acide aconitrique et l'acide itaconique, l'acide 5-norbornène-2,3-dicarboxylique, l'acide 1,2,3,6-tetrahydrophtalique, l'acide acrylique et l'acide méthacrylique ainsi que les anhydrides, sels et esters correspondants. De préférence, la polyoléfine est modifiée par de l'anhydride d'acide maléique.

Un grand nombre de polyoléfines modifiées comportant des fonctions carboxyliques est disponible sur le marché.

L'indice de fluidité de la polyoléfine modifiée est de préférence compris entre 0,1 et 30, de préférence entre 0,2 et 10 et tout particulièrement entre 0,2 et 2 cm³/10min sous 5Kg à 190°C afin de faciliter son mélange avec le polyamide.

Les polyoléfines modifiées peuvent se trouver sous forme d'ionomère, par exemple suite à la neutralisation au moins partielle des fonctions carboxyliques.

Le taux de greffage de la polyoléfine est un paramètre important puisqu'il peut influencer la contrainte seuil en affectant le nombre de liaisons susceptibles de se former à l'interface. Généralement, il est suffisant que le taux de greffage de la polyoléfine soit compris entre 0,01 et 20%, de préférence entre 0,02 et 10% et en particulier entre 0,05 et 5 % en poids d'acide carboxylique ou de son dérivé par rapport au poids de la polyoléfine.

La viscosité newtonienne de la polyoléfine modifiée est de préférence supérieure à 5000, et en particulier d'au moins 20 000 Pa.s à 220°C. Toutefois la viscosité peut être difficile à déterminer lorsque la polyoléfine modifiée présente un comportement viscoélastique de type solide élastique.

Le mélange selon l'invention comprend généralement entre 30 et 70 % en poids, et plus préférentiellement entre 35 et 60% en poids de polyoléfine modifiée.

La contrainte seuil des mélanges polymériques selon l'invention peut encore être augmentée en ajoutant des charges minérales.

La quantité de charges nécessaire pour faire apparaître une contrainte seuil est plus élevée pour des charges sphériques sans interaction entre elles que pour des charges structurantes.

On entend par charges structurantes des particules élémentaires de taille nanométrique qui forment des agrégats à l'échelle micrométrique, et qui au-dessus d'une certaine concentration forment un réseau de charges (phénomène de percolation). Ces charges peuvent être sphériques, comme les silices nanostructurées, ou à facteur de forme élevé, c'est-à-dire supérieur à 100, comme les nanotubes de carbone et les argiles exfoliées. Le facteur de forme étant défini comme le rapport de la plus grande dimension de la particule sur son épaisseur.

Par l'ajout de charges, on conserve la contrainte seuil souhaitée tout en augmentant la quantité de polyamide.

Certaines charges sont particulièrement intéressantes car elles permettent en outre de conférer une ou plusieurs fonctionnalités supplémentaires au mélange. Ainsi, l'ajout de charges de carbone sous différentes formes (noir de carbone, fibres de carbone, graphite, nanotubes de carbone) permet de rendre le mélange polymérique conducteur, ce qui est intéressant pour certains procédés de mise en peinture (voir « Conductive polyphenylene ether/polyamide blends for electrostatic painting applications » J.J. Scobbo, Antec'98, pp. 2468-2472). Il peut donc être avantageux d'ajouter au mélange polymérique des charges conductrices.

Afin de sauvegarder les propriétés du mélange polymérique, notamment une faible viscosité, il est préférable de maintenir la proportion de charges à une valeur raisonnable.

La proportion de charges dans le mélange polymérique selon l'invention peut aller de 0 à 30% en poids, et plus particulièrement de 5 à 20% en poids du mélange total.

### [Préparation et propriétés du mélange]

Le mélange polymérique décrit est préparé de la manière la plus simple en procédant à un mélange intime des constituants à une température à laquelle les composants polymères se trouvent à l'état fondu. Le mélange intime peut avoir lieu par différents moyens connus en soi, par exemple dans un réacteur interne de type Haake ou une extrudeuse bi-vis.

Les mélanges polymériques visés par la présente invention présentent à l'état fondu le comportement de fluides à contrainte seuil, c'est-à-dire qu'ils s'écoulent seulement lorsque la contrainte appliquée excède un certain seuil.

L'étude du module complexe de cisaillement (G*(ω)=G'(ω)+jG"(ω)) de ces mélanges fait apparaître un plateau sur le module élastique G' aux fréquences basses, c'est-à-dire inférieures à 1 rad/s. Comme évoqué plus haut, ce phénomène peut s'expliquer par la formation d'un copolymère *in situ* à l'interface du polyamide et de la polyoléfine modifiée.

La valeur de la contrainte seuil mesurée selon la méthode décrite ultérieurement est d'au moins 50 Pa, ce qui correspond approximativement à la contrainte exercée par le poids d'un parement de métal de 0,5mm d'épaisseur dans une structure sandwich. Avantageusement, la contrainte seuil des mélanges est comprise entre 200 et 2000 Pa.

Du fait que le mélange polymérique décrit flue seulement lorsque la contrainte excède la contrainte seuil, il peut satisfaire les conditions *a priori* inconciliables posées par les capacités thermiques des unités de laminage et la résistance à la cataphorèse.

La morphologie du mélange polymérique est, comme évoqué ci-dessus, de préférence une phase continue formant matrice d'une phase dispersée ou une phase co-continue. Lorsque le mélange comporte une phase dispersée, on observe que la phase dispersée se trouve le plus souvent sous forme de nodules. Cela étant, la phase dispersée peut également former des fibres (morphologie fibrillaire) ou des couches (morphologie lamellaire).

La morphologie nodulaire est cependant préférée. En effet, une telle morphologie assure une interface des polymères étendue et de ce fait la formation d'un réseau important de liaisons à l'interface, permettant d'assurer une contrainte seuil élevée. De préférence, le diamètre nodulaire moyen tel que déterminé expérimentalement par microscopie électronique à balayage (MEB) et analyse d'image est inférieur à 500 nm, préférentiellement inférieur à 300 nm, afin de favoriser l'interaction entre les chaînes de polymères pour former un réseau caoutchoutique engendrant la contrainte seuil.

La compatibilisation entre le polyamide et la polyoléfine est assurée par la formation *in situ* de copolymères formés par réaction entre les groupes amines terminaux des polyamides et les fonctions carboxyliques de la polyoléfine modifiée.

De préférence, la phase continue formant matrice est composée essentiellement du polyamide tandis que la phase dispersée ou co-continue est composée de la polyoléfine modifiée. Une telle morphologie du mélange polymérique offre l'avantage de conférer au mélange polymérique les propriétés mécaniques avantageuses du polyamide.

En principe, il est préféré que le nombre de copolymères par unité de surface de l'interface soit important, aboutissant à une contrainte seuil maximale. Cependant, une concentration trop importante en copolymères à l'interface peut affecter d'autres propriétés comme la viscosité. Aussi, on recherchera avantageusement un nombre de copolymères compris de préférence entre 3 et 50%, ce pourcentage correspondant à un rendement massique de réaction par rapport à l'espèce en défaut. Au delà de 50%, on obtient des mélanges polymériques présentant des propriétés différentes de celles recherchées.

### [Applications]

En raison des propriétés évoquées ci-dessus, les mélanges polymériques décrits sont particulièrement utiles pour la fabrication de composites métal-polymère, tels que des structures sandwich ou des parements métalliques recouverts de polymère. Ce type de composites est particulièrement recherché dans l'industrie automobile.

Les composites sont constitués le plus souvent d'un film de mélange polymérique selon l'invention appliqué sur une feuille ou compris entre deux feuilles de métal.

Le métal est le plus souvent un acier, dont le choix du type spécifique dépendra de l'application envisagée. Ainsi, dans le domaine automobile, des types d'acier habituellement utilisés sont le grade ES (EN DC01 à DC06) et le grade HLE (EN H240 LA à H400 LA). L'épaisseur des feuilles de métal utilisées pour cette application sera généralement comprise entre 0,1 mm à 3 mm. Le métal peut être non traité mais le plus souvent, il sera muni d'un ou plusieurs revêtements afin d'améliorer ses propriétés, tels que par exemple un revêtement de zinc ou d'alliage de zinc réalisé par galvanisation ou électrodéposition, ou un traitement de surface, un primaire, une base de peinture ou de vernis ou encore une couche d'huile.

Les composites métal-polymère peuvent être fabriqués selon l'un quelconque des procédés connus en soi.

Ainsi, selon un autre aspect, l'invention vise un procédé de fabrication d'un composite métal-polymère comprenant les étapes consistant en :
a. fourniture d'une première feuille de métal, éventuellement chauffée à la température de fusion du polymère ;
b. application d'un mélange polymérique selon l'invention sur la première feuille de métal pour former un composite métal-polymère ;
c. le cas échéant, application d'une seconde feuille de métal, éventuellement chauffée à la température de fusion du polymère, sur le mélange polymérique pour former un composite métal-polymère-métal ; et
d. chauffage du composite jusqu'à fusion du mélange polymérique au contact avec le métal pour compléter l'adhérence.

De préférence, le mélange polymérique est extrudé au préalable pour former un film polymérique. Cependant, il est également possible d'extruder le film polymérique directement sur la première feuille de métal ou de co-laminer le film polymérique entre les deux feuilles de métal en une seule étape.

L'extrusion est de préférence réalisée dans une extrudeuse bi-vis corotative. L'épaisseur du film polymérique dépend de l'application et est de préférence comprise entre 0,05 et 5 mm, et encore préféré entre 0,2 et 1 mm.

Le mélange polymérique décrit permet d'obtenir une surface polymérique adhérente avec des produits tels que des mastics, des adhésifs structuraux et des adhésifs crashs. Il est ainsi possible de procéder au surmoulage de polymère de la surface polymérique des composites métal-polymère obtenus.

Aussi, selon un autre aspect, l'invention vise les structures multicouches comportant entre deux feuilles de métal un film du mélange polymérique tel que décrit ci-dessus, notamment des composites métal-polymère-métal, comme des structures sandwich, ainsi que des parements comprenant une feuille de métal revêtue du mélange polymérique selon l'invention. Ces produits sont légers, rigides, emboutissables, peu onéreux et résistent à la cataphorèse et dès lors particulièrement utiles dans l'industrie automobile. En fonction des applications, on pourra avoir recours à des structures sandwich présentant deux parements de nature et/ou d'épaisseur différentes.

L'invention sera décrite plus en détail au moyen des exemples donnés ci-après et des figures en annexe, lesquelles montrent :
- Fig.1 :: un schéma de la réaction entre les groupements fonctionnels des polymères à l'interface d'un mélange polymérique selon l'invention ;
- Fig.2 :: une représentation schématique de l'interaction entre nodules de polyoléfine modifiée formant un réseau tridimensionnel ;
- Fig.3 :: les clichés en microscopie électronique à balayage (MEB) des mélange des exemples 1 à 7 après extraction de la phase polyoléfine;
- Fig.4 :: un graphique de la vitesse de déformation dE/dt en fonction de la contrainte σ des mélanges des exemples 1 à 4 ;
- Fig.5 :: un graphique de la vitesse de déformation dE/dt en fonction de la contrainte σ des mélanges des exemples 5 à 7 ;
- Fig.6 :: un graphique du module élastique G' pour différentes fréquences des mélanges des exemples 1 - 4 ;
- Fig.7 :: un graphique du module élastique G' pour différentes fréquences du mélange des exemples 5 à 7 ;
- Fig.8 :: un schéma du montage expérimental pour l'évaluation de la résistance à la cataphorèse d'un sandwich (acier DP 500, épaisseur=0.5mm et mélange polymérique épaisseur=1 mm) ; et
- Fig.9 :: l'adhésion évaluée par le test du plot pour les mélanges des exemples 1 - 4.

### EXEMPLES

### EXEMPLE 1 (PA11/POE-MAH)

Après séchage préalable dans une étuve sous vide à 70°C, on introduit 60g de polyamide 11 de Arkema (PA 11 Rilsan^{®}) et 40g de copolymère polyéthylène-octène modifié anhydride maléique à hauteur de 1,5% (POE-MAH, Tabond 8010 disponible chez Silon International) dans un mélangeur interne Haake Rheomix 600 porté à une température de 210°C (20°C supérieure à la température de fusion du polyamide).

Le mélange est malaxé entre 5 et 10 minutes jusqu'à stabilisation du couple de torsion exercé sur les pales du mélangeur.

Le mélange polymérique obtenu est ensuite pressé dans une presse hydraulique Lescuyer 200bars pour en faire des films de 1 mm d'épaisseur.

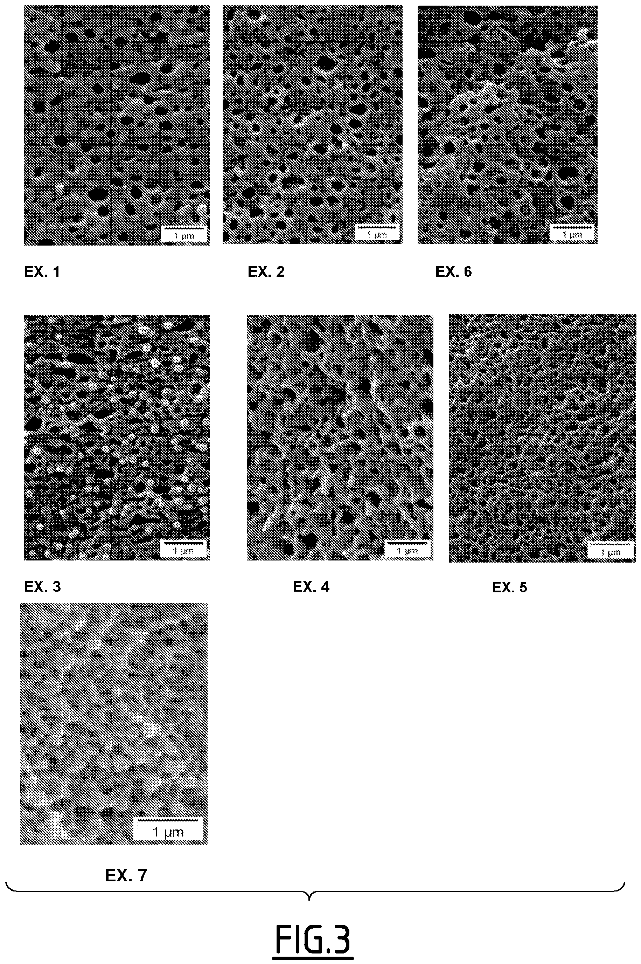

On conclut de l'observation au microscope électronique à balayage après extraction de la polyoléfine modifiée au toluène à 110°C pendant 2 à 7 jours que le mélange biphasique comporte une phase continue et des nodules de polyoléfine modifiée dont le diamètre est de l'ordre de 300 nm (voir figure 3).

### EXEMPLE 2 - 4 (PA11/POE-MAH)

Afin d'évaluer l'impact de la proportion en polyamide et polyoléfine dans le mélange, on répète le protocole indiqué à l'exemple précédent mais en variant les proportions des polymères conformément au tableau 1 ci-dessous.

On conclut de l'observation au microscope électronique à balayage après extraction de la polyoléfine modifiée réalisée comme décrit à l'exemple précédent (voir figure 3) que le mélange est biphasique pour l'ensemble des exemples et qu'il présente pour les exemples 1 et 2 des nodules de polyoléfine modifiée avec un diamètre de l'ordre de 300 nm et pour les exemples 3 et 4 un aspect à la limite de la co-continuité.

### EXEMPLE 5 (PA11/PE-MA⁻Na⁺)

Après séchage préalable dans une étuve sous vide à 80°C, on introduit 60g de polyamide 11 de Arkema (PA 11 Rilsan^{®}) et 40g de polyéthylène à faible densité modifié par 0,5% en poids d'anhydride d'acide maléique partiellement neutralisé (contre-ion sodium) (ionomère Priex^{®} 35392 disponible chez Addcomp Holland BV) dans un mélangeur interne Haake Rheomix 600 porté à une température de 210°C (20°C supérieure à la température de fusion du polyamide).

Le mélange est malaxé entre 5 et 10 minutes jusqu'à stabilisation du couple de torsion exercé sur les pales du mélangeur.

Le mélange polymérique obtenu est ensuite pressé dans une presse hydraulique Lescuyer 200bars pour en faire des films de 1 mm d'épaisseur.

On conclut de l'observation au microscope électronique à balayage après extraction de la polyoléfine modifiée par du toluène réalisée comme décrit à l'exemple 1 que le mélange est biphasique comportant une phase continue et des nodules de polyoléfine modifiée dont le diamètre est de l'ordre de 170 nm.

### EXEMPLE 6 (PA11/POE-MAH/Si)

Afin d'étudier l'effet d'une charge minérale sur la contrainte seuil, on prépare un mélange polymérique contenant en outre une silice à titre de charge.

Plus précisément, on prépare un mélange polymérique selon le protocole indiqué à l'exemple 1 en utilisant à titre de polyamide 49,5g d'un polyamide 11 (PA 11 Rilsan^{®} disponible chez Arkema), et à titre de polyoléfine modifiée 40,5g de polyéthylène octène modifié anhydride maléique à hauteur de 1,5% (POE-MAH, Tabond 8010 disponible chez Silon International) ainsi que 10g de silice pyrogénée hydrophile de surface spécifique d'environ 200 m²/g (Wacker fumed silica HDK N 20). Ce mélange présente un rapport polyamide : polyoléfine équivalent au mélange de l'exemple 2 (55% de PA11 et de 45% de POE-MAH).

On conclut de l'observation au microscope électronique à balayage après extraction de la polyoléfine modifiée réalisée comme décrit à l'exemple 1 que le mélange est biphasique comportant une phase continue et des nodules de polyoléfine modifiée dont le diamètre est de l'ordre de 300 nm (voir figure 3).

### EXEMPLE 7 (PA11/PE-MA⁻Na⁺)

Après séchage préalable dans une étuve sous vide à 80°C, on introduit 60g de polyamide 11 de Arkema (PA 11 Rilsan^{®}) et 40g de polyéthylène à haute densité modifié par 0,05% en poids d'anhydride d'acide maléique partiellement neutralisé (contre-ion sodium) (ionomère Priex^{®} 33101 disponible chez Addcomp Holland BV) dans un mélangeur interne Haake Rheomix 600 porté à une température de 210°C (20°C supérieure à la température de fusion du polyamide).

Le mélange est malaxé entre 5 et 10 minutes jusqu'à stabilisation du couple de torsion exercé sur les pales du mélangeur.

Le mélange polymérique obtenu est ensuite pressé dans une presse hydraulique Lescuyer 200bars pour en faire des films de 1 mm d'épaisseur.

On conclut de l'observation au microscope électronique à balayage après extraction de la polyoléfine modifiée par du toluène réalisée comme décrit à l'exemple 1 que le mélange est biphasique comportant une phase continue et des nodules de polyoléfine modifiée dont le diamètre est de l'ordre de 200 à 250 nm.

**Tableau 1 : Composition des mélanges polymériques**

| **Exemple** | **Polyamide** | | **Polyoléfine modifiée** | | **Silice** |
|---|---|---|---|---|---|
| | **Type** | **Proportion** [% en poids] | **Type** | **Proportion** [% en poids] | **Proportion** [% en poids] |
| 1 | PA11 | 60 | POE-MAH | 40 | - |
| 2 | PA11 | 55 | POE-MAH | 45 | - |
| 3 | PA11 | 50 | POE-MAH | 50 | - |
| 4 | PA11 | 45 | POE-MAH | 55 | - |
| 5 | PA11 | 60 | PE-MAH ionomère (0,5%) | 40 | - |
| 6 | PA11 | 49,5 | POE-MAH | 40,5 | 10 |
| 7 | PA11 | 60 | PE-MAH ionomère (0,05%) | 40 | - |

### EVALUATION DES MELANGES POLYMERIQUES

### A. Contrainte seuil

Les mesures rhéologiques ont été réalisées sur un rhéomètre à contrainte imposée équipé d'une géométrie cône-plan (modèle Rheometrics Scientific SR5).

L'échantillon de mélange polymérique a été mis sous forme de pastille de 1 mm d'épaisseur et de 25 mm de diamètre. Cet échantillon a été soumis à une contrainte instantanée variant entre 0 et 5000 Pa. L'évolution de la déformation est suivie par un capteur de déplacement. La température de mesure est fonction du polymère formant matrice et est identique à la température de mélange (20°C au-dessus du pic de fusion du polyamide).

La contrainte seuil est déterminée à partir du graphique dans lequel on porte la vitesse de déformation en fonction de la contrainte. Lorsque la courbe forme un seuil, le mélange en fusion présente un comportement de fluide à contrainte seuil. La contrainte seuil est déterminée graphiquement sur la courbe comme la contrainte limite au-delà de laquelle la vitesse de déformation augmente.

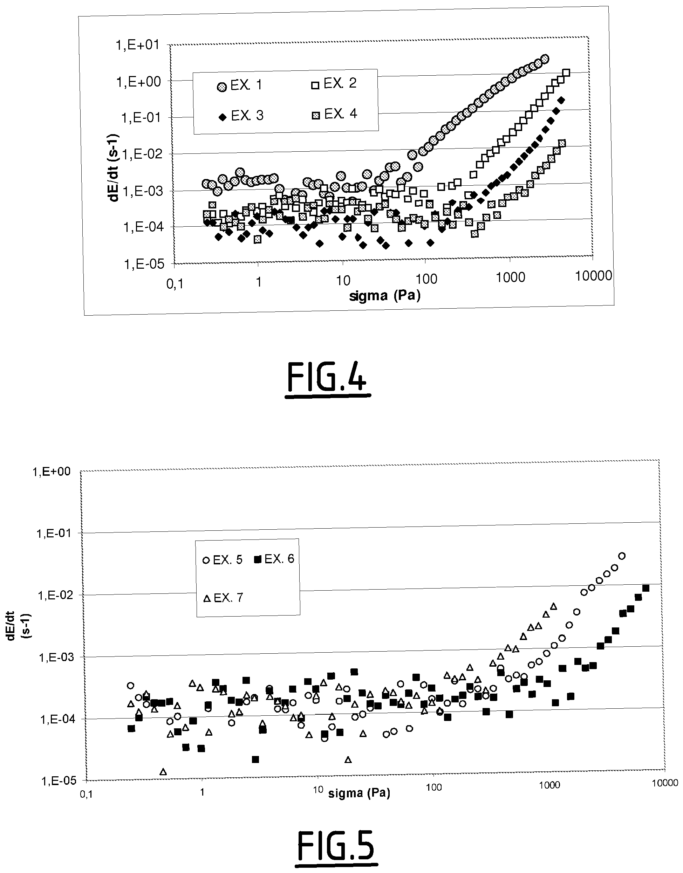

On constate que l'ensemble des mélanges des exemples 1 à 7 présente une contrainte seuil à la température considérée. Les résultats sont illustrés en détail dans les figures 4 et 5. Les valeurs de contrainte seuil déterminées à partir des courbes sont portées dans le tableau 2 ci-dessous.

**Tableau 2 : Contrainte seuil des mélanges polymériques**

| **Exemple** | **Contrainte seuil** [Pa] |
|---|---|
| 1 | 50 |
| 2 | 200 |
| 3 | 200 |
| 4 | 700 |
| 5 | 400 |
| 6 | 2000 |
| 7 | 200 |

L'augmentation progressive de la contrainte seuil observée pour les exemples 1 à 4 de 50 Pa à 700 Pa peut être expliquée par une augmentation de la densité de nodules, étant donné que leurs diamètres sont inchangés, et le renforcement subséquent des interactions entre nodules et des phénomènes d'enchevêtrements de chaînes, lesquels induisent à leur tour une relaxation des chaînes plus lente et l'apparition d'un plateau caoutchoutique.

On constate par ailleurs que la présence de groupes ioniques semble avoir un effet favorable sur le plan de la contrainte seuil.

Enfin, l'ajout de charges minérales a un effet significatif sur la contrainte seuil des mélanges de l'invention, puisqu'elle permet de passer de 200 Pa pour l'exemple 2 à 2000 Pa pour l'exemple 6.

### B. Module élastique

Le module complexe de cisaillement a été déterminé sur un rhéomètre à déformation imposée RMS 800 à géométrie plan-plan sur un domaine de fréquence de 0.01-100 rad/s, l'échantillon ayant été préalablement mis sous forme d'une pastille de 1 mm d'épaisseur et de 25 mm de diamètre. La température de mesure étant identique à la température de mélange (20°C au-dessus du pic de fusion du polyamide).

Cette technique permet d'étudier la viscoélasticité dans le domaine linéaire du polymère à l'état fondu. Qualitativement, l'existence d'une contrainte seuil est corrélée à l'observation d'un plateau aux basses fréquences sur la courbe représentant le module élastique G' en fonction de la fréquence de sollicitation. Dans cette zone, le matériau se comporte comme un caoutchouc où les points de réticulation sont remplacés par des interactions fortes du type enchevêtrements physiques.

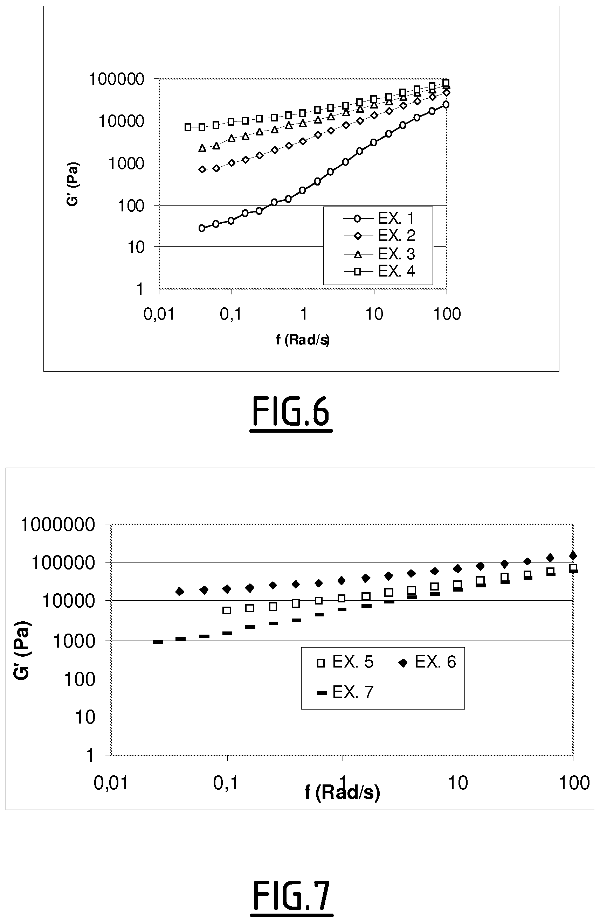

Les résultats sont illustrés dans les figures 6 et 7.

La figure 6 illustre l'allure de la courbe obtenue. Le mélange de l'exemple 1 possède un module élastique aux basses fréquences faible et dont le plateau n'est pas visible car situé en dehors de la plage examinée. L'augmentation de la part de polyoléfine modifiée dans la formulation de 40% à 55% en poids entraîne une augmentation progressive du module élastique et l'apparition d'un plateau aux alentours de 10 000 Pa à basse fréquence.

La figure 7 met en évidence la courbe obtenue pour les mélanges selon les exemples 5, 6 et 7. On constate que le module élastique présente un plateau aux faibles fréquences pour l'ensemble de ces mélanges. Par ailleurs, on observe un impact important de l'ajout de charges au niveau du module élastique. En effet, l'ajout de charges permet de ramener la valeur du module élastique du mélange de l'exemple 6 (ratio massique polyamide/polyoléfine 55 :45, comme l'exemple 2) au niveau de celle de l'exemple 4 (voir figure 6), dont la part de polyoléfine est pourtant supérieure.

### C. Fluage

Le comportement en fluage des mélanges polymériques selon l'invention a été évalué expérimentalement comme suit.

On a fabriqué des structures sandwich avec une dimension de 90x50x2mm avec un acier de grade DP 500 d'épaisseur 0.5 mm galvanisé, dégraissé (gardoclean^{®} 5183) et traité chimiquement en surface (Granodine^{®} 1455 vendu par la société Henkel dilué à 2 % dans l'eau). Les sandwichs acier/polymère/acier ont été élaborés sous presse à l'aide de cales pour conserver l'épaisseur du polymère constante autour de 0.8 mm.

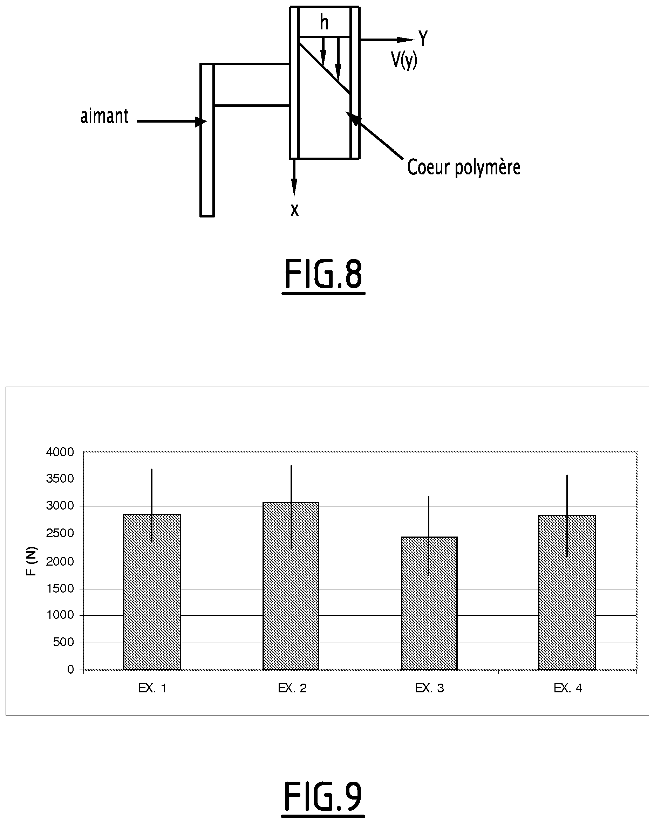

Les conditions lors de la cataphorèse sont ensuite simulées en tenant le sandwich verticalement à l'aide d'un aimant qui retient l'un des deux parements. Ce sandwich est ensuite placé pendant 1 heure dans une étuve dont la température est de 235°C pour assurer la fusion complète du polymère. Le montage du test est schématiquement illustré à la figure 8.

La résistance du sandwich au test est évaluée par examen visuel des structures sandwich après le test. Lorsqu'on n'observe aucun glissement des parements pour les structures sandwich, on considère que le mélange polymérique présente la tenue au fluage nécessaire pour une résistance à la cataphorèse.

L'ensemble des sandwichs évalués résistent au test de fluage.

### D. Adhérence

L'adhésion des mélanges polymériques sur l'acier a été évaluée au moyen de deux tests distincts.

### Test de traction par arrachement

Dans ce test, l'adhérence du polymère au métal est évaluée au moyen d'un test de traction par arrachement selon la norme ISO 4624.

Le principe consiste à mesurer la force maximale nécessaire pour arracher un plot cylindrique d'acier traité à la Granodine^{®} 1455 (vendu par la société Henkel) collé au substrat d'acier DP500 d'ArcelorMittal d'une épaisseur de 0,5mm également traité à la Granodine^{®} 1455 via un film du mélange polymérique d'une épaisseur de 100µm. Le test est réalisé sur une machine Instron couplée à un ordinateur qui enregistre la force exercée en fonction du déplacement.

On observe que les ruptures sont mixtes, c'est-à-dire que la rupture a lieu aussi bien à l'interface acier/polymère (rupture adhésive) mais aussi dans le film polymérique (rupture cohésive).

Les résultats sont illustrés à la figure 9. On constate que la force nécessaire pour arracher le plot est très satisfaisante pour les mélanges selon les exemples 1 à 4.

### Test de pelage

Dans ce test, l'adhérence du polymère au métal est évaluée au moyen d'un test de pelage selon la norme NF T 76-112.

Afin de réaliser ce test, on prépare des sandwichs acier/polymère/acier sous presse hydraulique Lescuyer 200 bars en contrôlant l'épaisseur du polymère autour de 0,7 mm à l'aide de cales. Les sandwichs obtenus sont ensuite découpés en bande de 20 cm de long sur 2.5 cm de large.

Avant de réaliser le pelage des amorces sont faites de manière à obtenir une rupture adhésive entre le polymère et le métal. Ensuite, le pelage est réalisé par traction verticale sur une longueur de 10 cm par une machine à pelage Instron. La rupture est mixte aussi dans ce cas.

On constate qu'on observe une très bonne adhérence pour l'ensemble des compositions examinées.

En conclusion, la réaction aux interfaces des groupes fonctionnels du polyamide et de la polyoléfine modifiée dans les mélanges selon l'invention aboutit à une structure spécifique engendrant des propriétés rhéologiques caractérisées par l'apparition d'une contrainte seuil.

De tels mélanges polymériques présentent les qualités requises pour l'utilisation dans la fabrication de composites métal-polymères car ils sont extrudables, rigides, présentent un comportement à l'emboutissage approprié et une excellente adhésion au métal.

La présence d'une contrainte seuil permet en outre d'assurer la résistance à la cataphorèse même à l'état fondu puisque le mélange ne flue pas tant que la contrainte n'excède pas la contrainte seuil. La valeur de la contrainte seuil peut être optimisée notamment au niveau du choix du polyamide et de la proportion de la polyoléfine modifiée dans le mélange, mais aussi par ajout de charges.

## Revendications

1. Mélange polymérique biphasique comprenant :
(a) un polyamide présentant un point de fusion d'au plus égal à 210°C,
(b) une polyoléfine modifiée comportant des fonctions carboxyliques,
dont le comportement rhéologique à l'état fondu est **caractérisé par** une contrainte seuil d'au moins 50 Pa.

2. Mélange selon la revendication 1, comprenant 30 à 70% en poids de polyamide.

3. Mélange selon les revendications 1 ou 2, comprenant 30 à 70 % en poids de polyoléfine modifiée.

4. Mélange selon l'une des revendications 1 à 3, dans laquelle la polyoléfine modifiée est un polyéthylène modifié.

5. Mélange selon l'une des revendications 1 à 4, dans laquelle la polyoléfine modifiée est modifiée par de l'anhydride d'acide maléique.

6. Mélange selon l'une des revendications 1 à 5, dans laquelle la polyoléfine modifiée est modifiée par 0,01 à 20 % en poids de composé comportant des fonctions carboxyliques par rapport au poids final de la polyoléfine modifiée.

7. Mélange selon l'une des revendications 1 à 6, dans laquelle le polyamide est un polyamide 11.

8. Mélange selon l'une des revendications 1 à 7, comportant une phase continue composée essentiellement de polyamide et une phase dispersée ou co-continue composée essentiellement de polyoléfine.

9. Mélange selon la revendication 8, dans laquelle la phase dispersée est sous forme de nodules dont le diamètre moyen est de préférence inférieur à 500 nm.

10. Mélange selon l'une des revendications 1 à 9, comprenant en outre 5 à 20% en poids de charges.

11. Procédé de préparation du mélange polymérique selon l'une des revendications précédentes, comprenant les étapes de :
(a) fournir une quantité appropriée de polyamide et une quantité appropriée de polyoléfine modifiée comportant des fonctions carboxyliques ; et
(b) mélanger le polyamide et la polyoléfine modifiée à une température supérieure au pic de fusion du polyamide.

12. Procédé de fabrication d'un composite métal-polymère comprenant les étapes consistant en :
(i) fourniture d'une première feuille de métal, éventuellement chauffée à la température de fusion du mélange polymérique;
(ii) application d'un mélange polymérique selon l'une des revendications 1 à 10 sur la première feuille de métal pour former un composite métal-polymère ;
(iii) le cas échéant, application d'une seconde feuille de métal éventuellement chauffée à la température de fusion du polymère, sur le mélange polymérique pour former un composite métal-polymère-métal ; et
(iv) chauffage du composite jusqu'à fusion du mélange polymérique au contact avec le métal pour compléter l'adhérence.

13. Structures sandwich comportant entre deux feuilles de métal un film du mélange polymérique selon l'une des revendications 1 à 10.

14. Parement comprenant une feuille de métal revêtue du mélange polymérique selon l'une des revendications 1 à 10.

## Patentansprüche

1. Biphasische Polymermischung, umfassend:
(a) ein Polyamid mit einem Schmelzpunkt von höchstens gleich 210°C,
(b) ein modifiziertes Polyolefin, das Carboxylfunktionen aufweist,
dessen Fließverhalten in geschmolzenem Zustand durch eine Fließspannung von wenigstens 50 Pa gekennzeichnet ist.

2. Mischung nach Anspruch 1, umfassend 30 bis 70 Gew.-% Polyamid.

3. Mischung nach den Ansprüchen 1 oder 2, umfassend 30 bis 70 Gew.-% modifiziertes Polyolefin.

4. Mischung nach einem der Ansprüche 1 bis 3, wobei das modifizierte Polyolefin ein modifiziertes Polyethylen ist.

5. Mischung nach einem der Ansprüche 1 bis 4, wobei das modifizierte Polyolefin durch Maleinsäureanhydrid modifiziert ist.

6. Mischung nach einem der Ansprüche 1 bis 5, wobei das modifizierte Polyolefin durch 0,01 bis 20 Gew.-% einer Carboxylfunktionen aufweisenden Verbindung, bezogen auf das Endgewicht des modifizierten Polyolefins, modifiziert ist.

7. Mischung nach einem der Ansprüche 1 bis 6, wobei das Polyamid ein Polyamid 11 ist.

8. Mischung nach einem der Ansprüche 1 bis 7, die eine kontinuierliche Phase, die im Wesentlichen aus Polyamid besteht, und eine disperse oder cocontinuierliche Phase, die im Wesentlichen aus Polyolefin besteht, aufweist.

9. Mischung nach Anspruch 8, wobei die disperse Phase in Form von Kügelchen vorliegt, deren mittlerer Durchmesser vorzugsweise unter 500 nm liegt.

10. Mischung nach einem der Ansprüche 1 bis 9, ferner umfassend 5 bis 20 Gew.-% Füllstoffe.

11. Verfahren zur Herstellung der Polymermischung nach einem der vorhergehenden Ansprüche, umfassend die folgenden Schritte:
(a) Bereitstellen einer geeigneten Menge an Polyamid und einer geeigneten Menge an modifiziertem Polyolefin, das Carboxylfunktionen aufweist; und
(b) Mischen des Polyamids und des modifizierten Polyolefins bei einer Temperatur über dem Schmelzpeak des Polyamids.

12. Verfahren zur Herstellung eines Metall-Polymer-Verbundstoffs, umfassend die Schritte, die aus Folgendem bestehen:
(i) Bereitstellen einer ersten Metallfolie, die eventuell auf die Schmelztemperatur der Polymermischung erhitzt ist;
(ii) Aufbringen einer Polymermischung nach einem der Ansprüche 1 bis 10 auf die erste Metallfolie, um einen Metall-Polymer-Verbundstoff zu bilden;
(iii) gegebenenfalls Aufbringen einer zweiten Metallfolie, die eventuell auf die Schmelztemperatur des Polymers erhitzt ist, auf die Polymermischung, um einen Metall-Polymer-Metall-Verbundstoff zu bilden; und
(iv) Erhitzen des Verbundstoffs bis zum Schmelzen der Polymermischung beim Kontakt mit dem Metall, um die Anhaftung zu vervollständigen.

13. Sandwich-Strukturen, die zwischen zwei Metallfolien einen Film der Polymermischung nach einem der Ansprüche 1 bis 10 aufweisen.

14. Verkleidung, umfassend eine Metallfolie, die mit der Polymermischung nach einem der Ansprüche 1 bis 10 beschichtet ist.

## Claims

1. A biphasic polymer blend comprising:
(a) a polyamide having a melting point of at most equal to 210°C,
(b) a modified polyolefin comprising carboxylic functions,
the rheological behaviour of which in the molten state is **characterised by** a yield stress of at least 50 Pa.

2. A blend according to Claim 1, comprising 30 to 70% by weight of polyamide.

3. A blend according to Claims 1 or 2, comprising 30 to 70% by weight of modified polyolefin.

4. A blend according to one of Claims 1 to 3, in which the modified polyolefin is a modified polyethylene.

5. A blend according to one of Claims 1 to 4, in which the modified polyolefin is modified by maleic anhydride.

6. A blend according to one of Claims 1 to 5, in which the modified polyolefin is modified by 0.01 to 20% by weight, based on the final weight of the modified polyolefin, of a compound comprising carboxylic functions.

7. A blend according to one of Claims 1 to 6, in which the polyamide is a polyamide 11.

8. A blend according to one of Claims 1 to 7, comprising a continuous phase essentially composed of polyamide and a dispersed or co-continuous phase essentially composed of polyolefin.

9. A blend according to Claim 8, in which the dispersed phase takes the form of nodules, the average diameter of which is preferably less than 500 nm.

10. A blend according to one of Claims 1 to 9, furthermore comprising 5 to 20% by weight of fillers.

11. A method for preparing the polymer blend according to one of the preceding claims, comprising the steps of:
(a) providing an appropriate quantity of polyamide and an appropriate quantity of modified polyolefin comprising carboxylic functions; and
(b) blending the polyamide and the modified polyolefin at a temperature greater than the melting peak of the polyamide.

12. A method for manufacturing a metal-polymer composite comprising the steps consisting of:
(i) providing a first metal sheet, optionally heated to the melting temperature of the polymer blend;
(ii) applying a polymer blend according to one of Claims 1 to 10 onto the first metal sheet to form a metal-polymer composite;
(iii) if appropriate, applying a second metal sheet optionally heated to the melting temperature of the polymer onto the polymer blend to form a metal-polymer-metal composite; and
(iv) heating the composite until the polymer blend in contact with the metal melts to take adhesion to completion.

13. Sandwich structures comprising a film of the polymer blend according to one of Claims 1 to 10 between two metal sheets.

14. A facing comprising a metal sheet coated with the polymer blend according to one of Claims 1 to 10.
